# EUROPEAN PATENT APPLICATION

(11) **EP 4 141 471 A1**
(43) Date of publication of application: **01.03.2023**
(21) Application number: 22191522.6
(22) Date of filing: 22.08.2022
(51) Int. Cl.: G01S 7/40, G01S 7/481, G01S 7/497

(54) **ELECTROMAGNETIC WAVE TRANSMISSION COVER**

(30) Priority: 24.08.2021 JP 2021136717
(71) Applicant: Toyoda Gosei Co., Ltd., Kiyosu-shi, Aichi 452-8564 (JP)
(72) Inventor: HIRANO, Risa, Kiyosu-shi, 452-8564 (JP); FUKAGAWA, Koji, Kiyosu-shi, 452-8564 (JP)
(74) Representative: Kramer Barske Schmidtchen Patentanwälte PartG mbB

(57) **Abstract**

An electromagnetic wave transmission cover (1) includes: a design portion (2) disposed on a front side of a vehicular electromagnetic wave device (8) and exposed to an outside of a passenger compartment of a vehicle; a housing (4) integrated with the design portion and disposed on a back side of the design portion; and a heating element (3) provided integrally with the design portion. The housing is lower in thermal conductivity than the design portion.

## Description

### BACKGROUND

### 1. Field of the Invention

The present invention relates to an electromagnetic wave transmission cover including a design portion disposed on the front side of a vehicular electromagnetic wave device.

### 2. Description of the Related Art

In recent years, vehicle driver assistance systems have been developed actively, and various vehicular electromagnetic wave devices used in the driving systems are attached to vehicles.

Light detection and ranging (LiDAR), which is a type of the vehicular electromagnetic wave devices, is a remote sensing technique using light and is used in driver assistance systems.

In LiDAR, a laser is used to emit light with a relatively short wavelength toward an object, and the light reflected by the object is detected. Especially, LiDAR for near-infrared sensing is advantageous for detecting an obstacle at a relatively short distance.

In addition, an electromagnetic wave radar device such as millimeter wave and laser radars is also known as another vehicular electromagnetic wave device. The electromagnetic wave radar device is used for vehicular adaptive cruise control (ACC).

As for the ACC technique, a sensor mounted on the front side of a vehicle measures traveling information such as the inter-vehicle distance between and relative speeds of the host vehicle and a preceding vehicle and throttle or brake control is performed based on the traveling information to accelerate or decelerate the host vehicle and control the inter-vehicle distance. In recent years, ACC has attracted attention as a core technology of an intelligent transport system (ITS) for traffic congestion alleviation and accident reduction. A millimeter wave radar as a type of electromagnetic wave radar device transmits a millimeter wave with a frequency of 30 GHz to 300 GHz and a wavelength of 1 to 10 mm and receives a millimeter wave reflected by an object. The inter-vehicle distance between and relative speeds of the host vehicle and the preceding vehicle can be calculated from the difference between the transmitted wave and the received wave.

The emission and detection units of the various vehicular electromagnetic wave devices described above are mounted on the outermost side of a vehicle (that is, the front end side, the side end side, the rear end side, and the like of the vehicle). The design of the vehicle is impaired when the emission and detection units are visually recognized from the outside of the vehicle. Accordingly, it is common to provide a design portion covering the emission and detection units further outside the emission and detection units.

The design portion is a part exposed to the outside of the passenger compartment of a vehicle, is disposed on the path of an electromagnetic wave of a vehicular electromagnetic wave device, and allows the transmission of the electromagnetic wave.

Here, since the design portion is exposed to the outside of the passenger compartment, frost may be formed in cold weather or snow may accumulate during snowfall. When the design portion is covered with frost or snow, the sensing function of the vehicular electromagnetic wave device disposed on the back side thereof, that is, in the back, the communication function of the communication device in the vehicular electromagnetic wave device, and the like may be impaired.

JP-A-2020-165943 introduces an invention relating to an electromagnetic wave transmission cover for covering an infrared sensor as a type of vehicular electromagnetic wave device. The electromagnetic wave transmission cover introduced in JP-A-2020-165943 is a cover 4 for an infrared sensor including a cover base material 5 provided on the path of infrared rays transmitted and received by an infrared sensor 3 and a heater wire 8 provided on the surface of the cover base material 5 and generating heat by energization. It is conceivable that the cover base material 5 corresponds to the design portion described above. In this type of electromagnetic wave transmission cover, the heater wire 8, that is, a heating element generates heat to warm the cover base material 5, that is, a design portion, and thus the frost or snow covering the design portion can be melted. Also conceivable is that it is possible to suppress frost or snow impairing the sensing function, communication function, and the like of a vehicular electromagnetic wave device as a result.

As described above, in the electromagnetic wave transmission cover introduced in JP-A-2020-165943, a heating element provided integrally with a design portion generates heat and the design portion is directly warmed by heat conduction from the heating element. As a result, it is possible to melt the frost or snow covering the design portion and suppress various harmful effects attributable to the frost or snow.

Here, in recent years, various vehicle-mounted devices have been mounted on vehicles and it has been required to reduce the amount of electric power consumed by each vehicle-mounted device. In electric vehicles and hybrid cars that have emerged in recent years, it is particularly desired to reduce the power consumption of vehicle-mounted devices so that a sufficient traveling distance is ensured after charging.

The inventor of the present invention has conducted extensive research in order to realize an energy-saving vehicle-mounted device. In the process, the inventor has noticed that some of the heat generated by the heating element may be lost not to be used for heating the electromagnetic wave transmission cover in an electromagnetic wave transmission cover integrated with a heating element as introduced in JP-A-2020-165943.

In other words, in the electromagnetic wave transmission cover introduced in JP-A-2020-165943, the heat conducted from the heating element to the design portion is further conducted to a housing, to be specific, a case for accommodating an infrared sensor as described in the example of JP-A-2020-165943. As a result, the time or the amount of heat required to heat the design portion to a sufficient temperature may increase more than necessary.

### SUMMARY

The present invention has been made in view of the above circumstances, and an object of the present invention is to provide a technique with which a design portion can be efficiently heated in an electromagnetic wave transmission cover including the design portion, a heating element provided integrally with the design portion, and a housing.

According to an aspect of the present invention, there is provided an electromagnetic wave transmission cover including: a design portion disposed on a front side of a vehicular electromagnetic wave device and exposed to an outside of a passenger compartment of a vehicle; a housing integrated with the design portion and disposed on a back side of the design portion; and a heating element provided integrally with the design portion, where the housing is lower in thermal conductivity than the design portion.

According to another aspect of the present invention, there is provided an electromagnetic wave transmission cover including: a design portion disposed on a front side of a vehicular electromagnetic wave device and exposed to an outside of a passenger compartment of a vehicle; a housing disposed on a back side of the design portion; an intermediate member integrated with the design portion and the housing and interposed between the design portion and the housing; and a heating element provided integrally with the design portion, where the intermediate member is lower in thermal conductivity than the housing.

The electromagnetic wave transmission cover of the present invention includes a design portion, a heating element provided integrally with the design portion, and a housing and the design portion can be heated efficiently.

### BRIEF DESCRIPTION OF THE DRAWINGS

The present invention will become more fully understood from the detailed description given hereinbelow and the accompanying drawing which is given by way of illustration only, and thus is not limitative of the present invention and wherein:
Fig. 1 is an explanatory diagram schematically illustrating an electromagnetic wave transmission cover of Example 1.
Fig. 2 is an explanatory diagram schematically illustrating a state where the electromagnetic wave transmission cover of Example 1 is cut.
Fig. 3 is an explanatory diagram schematically illustrating a state where an electromagnetic wave transmission cover of Example 2 is cut.
Fig. 4 is an explanatory diagram schematically illustrating a state where an electromagnetic wave transmission cover of Example 3 is cut.
Fig. 5 is an explanatory diagram schematically illustrating a state where an electromagnetic wave transmission cover of Example 4 is cut.

### DETAILED DESCRIPTION OF THE INVENTION

Hereinafter, modes for carrying out the present invention will be described. Unless otherwise specified, the numerical range of "a to b" described in the present specification includes the lower limit a and the upper limit b in the range. Numerical ranges can be configured by combining, in any manner, the upper and lower limit values and numerical values listed in the examples. Further, any numerical value selected from the numerical ranges can be a new upper or lower limit numerical value.

In an electromagnetic wave transmission cover according to a first aspect of the present invention, a housing is integrated with a design portion and disposed on the back side of the design portion. In other words, in the electromagnetic wave transmission cover of the first aspect, the heat generated by a heating element and conducted to the design portion can also be conducted to the housing integrated with the design portion through the design portion. However, in the electromagnetic wave transmission cover of the first aspect, the thermal conductivity of the housing is lower than the thermal conductivity of the design portion, and thus heat conduction from the design portion to the housing is hindered. As a result, with the electromagnetic wave transmission cover of the first aspect, the design portion can be efficiently warmed by the heat generated by the heating element.

In addition, in an electromagnetic wave transmission cover according to a second aspect of the present invention for solving the above problems, an intermediate member is interposed between a design portion and a housing. Accordingly, in the electromagnetic wave transmission cover of the second aspect, the heat generated by a heating element and conducted to the design portion can be conducted to the intermediate member prior to the housing. Here, in the electromagnetic wave transmission cover of the second aspect, the thermal conductivity of the intermediate member is lower than the thermal conductivity of the housing, and thus heat conduction from the design portion to the housing via the intermediate member is hindered. As a result, with the electromagnetic wave transmission cover of the second aspect as well, the design portion can be efficiently warmed by the heat generated by the heating element.

Hereinafter, each component of the electromagnetic wave transmission cover of the present invention will be described in detail. In the present specification, in a case where the electromagnetic wave transmission cover of the present invention is referred to without particular description, the electromagnetic wave transmission cover of the first aspect and the electromagnetic wave transmission cover of the second aspect are collectively referred to.

The design portion of the electromagnetic wave transmission cover of the present invention is disposed on the front side of a vehicular electromagnetic wave device and exposed to the outside of the passenger compartment of a vehicle. It can be said that the design portion is on the electromagnetic wave path of the vehicular electromagnetic wave device.

The vehicular electromagnetic wave device is not particularly limited insofar as the device has an emission unit for emitting an electromagnetic wave and/or a detection unit for receiving an electromagnetic wave. The type of the electromagnetic wave is not particularly limited, either.

Specific examples of the vehicular electromagnetic wave device include the above LiDAR, radar devices such as millimeter wave and laser radars, camera devices such as digital and optical cameras, and foot sensors for door opening and closing.

The electromagnetic wave may be any that is emitted and/or received by the various vehicular electromagnetic wave devices described above. Examples of the electromagnetic wave include infrared rays, millimeter waves, laser waves, and visible rays having various wavelengths.

The design portion in the electromagnetic wave transmission cover of the present invention may be any that is capable of transmitting an electromagnetic wave derived from a vehicular electromagnetic wave device. The material of the design portion is not particularly limited, and a material capable of transmitting an electromagnetic wave may be selected.

Given that the electromagnetic wave transmission cover of the present invention is mounted on a vehicle, it is preferable to select a resin such as polycarbonate (PC), acrylic resin, polypropylene (PP) as the material of the design portion. The design portion may have a one-layer structure or a multi-layer structure in which, for example, a design layer capable of displaying various designs by painting, printing, metal deposition, or the like and a coat layer with which the design layer or the design portion itself is coated are formed on a base layer.

A heating element is integrally provided in the design portion. A general heating element such as a heater wire may be used as the heating element. Although the mechanism of action by which the heating element generates heat is not particularly limited in the electromagnetic wave transmission cover of the present invention, since the vehicular exterior component of the present invention is mounted on a vehicle, the heating element preferably has a simple structure and a heating element that generates heat by receiving electric power is particularly preferable.

The heating element may be integrated with the design portion by a method such as adhesion and welding or may be integrated with the design portion when the design portion is molded by a method such as insert molding. In addition, the heating element may be integrated with any part of the design portion, examples of which include the back and side surfaces of the design portion. In some cases, the heating element may be integrated with the surface of the design portion.

The housing is a part of the electromagnetic wave transmission cover of the present invention that is disposed on the back side of the design portion.

In the electromagnetic wave transmission cover of the present invention, the shape of the housing is not particularly limited. For example, the housing may be in the shape of a box capable of accommodating the vehicular electromagnetic wave device or may be in the shape of a frame covering at least a part of the vehicular electromagnetic wave device.

The housing is integrated with the design portion in the electromagnetic wave transmission cover of the first aspect of the present invention.

In the electromagnetic wave transmission cover of the first aspect, the thermal conductivity of the housing is lower than the thermal conductivity of the design portion. Any method may be used as a method for making the thermal conductivity of the housing lower than the thermal conductivity of the design portion. For example, a material lower in thermal conductivity than the material of the design portion may be used as the material of the housing. Alternatively, the same material may be used for the housing and the design portion with only the housing provided with a heat insulating portion such as air bubbles and an air layer.

In the electromagnetic wave transmission cover of the first aspect, the difference in thermal conductivity between the design portion and the housing is not particularly limited. The range of 0.01 W/(m·K) or more, 0.03 W/(m·K) or more, 0.05 W/(m·K) or more, 0.75 W/(m·K) or more, or 0.1 W/(m·K) or more can be exemplified as an example of the preferable difference in thermal conductivity between the design portion and the housing in the electromagnetic wave transmission cover of the first aspect. The difference in thermal conductivity between the design portion and the housing has no upper limit, and 100 W/(m·K) or less can be exemplified if any.

As a suitable combination of the material of the design portion and the material of the housing in the electromagnetic wave transmission cover of the first aspect, for example, in a case where polycarbonate is selected as the material of the design portion, it is preferable to select polyethylene terephthalate, polypropylene, foamed polystyrene, ABS resin, or butyl rubber as the material of the housing.

On the other hand, in the electromagnetic wave transmission cover of the second aspect of the present invention, the housing is integrated with the intermediate member and integrated with the design portion via the intermediate member.

In the electromagnetic wave transmission cover of the second aspect, the thermal conductivity of the intermediate member is lower than the thermal conductivity of the housing. Any method may be used as a method for making the thermal conductivity of the intermediate member lower than the thermal conductivity of the housing. As in the electromagnetic wave transmission cover of the first aspect, a material lower in thermal conductivity than the material of the housing may be used as the material of the intermediate member. Alternatively, the same material may be used for the housing and the intermediate member with only the intermediate member provided with a heat insulating portion such as air bubbles and an air layer. In addition, a member having an adhesive function such as an adhesive and a double-sided tape may be selected as the intermediate member.

In the electromagnetic wave transmission cover of the second aspect, the difference in thermal conductivity between the intermediate member and the housing is not particularly limited. The range of 0.01 W/(m·K) or more, 0.03 W/(m·K) or more, 0.05 W/(m·K) or more, 0.75 W/(m·K) or more, or 0.1 W/(m·K) or more can be exemplified as an example of the preferable difference in thermal conductivity between the intermediate member and the housing in the electromagnetic wave transmission cover of the second aspect. The difference in thermal conductivity between the design portion and the housing has no upper limit, and 300 W/(m·K) or less can be exemplified if any.

In the electromagnetic wave transmission cover of the second aspect, the thermal conductivity of the intermediate member may be lower than the thermal conductivity of the design portion or may be higher than the thermal conductivity of the design portion. In any case, heat conduction from the intermediate member to the housing can be suppressed insofar as the thermal conductivity of the intermediate member is lower than the thermal conductivity of the housing. The thermal conductivity of the intermediate member is preferably lower than the thermal conductivity of the design portion. Then, not only heat conduction from the intermediate member to the housing but also heat conduction from the design portion to the intermediate member can be suppressed and the design portion can be warmed more efficiently.

Further, it can be said that heat conduction from the design portion to the housing can be more effectively blocked or suppressed by the intermediate member and the effect of the intermediate member described above is more noticeable when the thickness of the intermediate member, that is, the length of the intermediate member between the design portion and the housing is larger. As a preferable range of the thickness of the intermediate member, the range of 20 µm or more, 50 µm or more, 1 mm or more, 5 mm or more, 10 mm or more, or 12 mm or more can be exemplified.

As for the preferable thickness of the intermediate member, 100 mm or less is practical although there is no upper limit value.

As a suitable combination of the material of the housing and the material of the intermediate member in the electromagnetic wave transmission cover of the second aspect, for example, in a case where aluminum is selected as the material of the housing, it is preferable to select polyethylene terephthalate, polypropylene, foamed polystyrene, ABS resin, or butyl rubber as the material of the intermediate member.

A known method may be adopted as a method for measuring the thermal conductivity. However, it is necessary to adopt the same method as a method for measuring the thermal conductivity of each part in the same electromagnetic wave transmission cover.

The electromagnetic wave transmission cover of the present invention may or may not be provided with a vehicular electromagnetic wave device. For example, in a case where a vehicular electromagnetic wave device is disposed in the housing, the electromagnetic wave transmission cover of the present invention is preferably provided with the vehicular electromagnetic wave device.

Hereinafter, the electromagnetic wave transmission cover of the present invention will be described with reference to specific examples.

### Example 1

The electromagnetic wave transmission cover of Example 1 includes LiDAR as a vehicular electromagnetic wave device and is the electromagnetic wave transmission cover of the first aspect of the present invention.

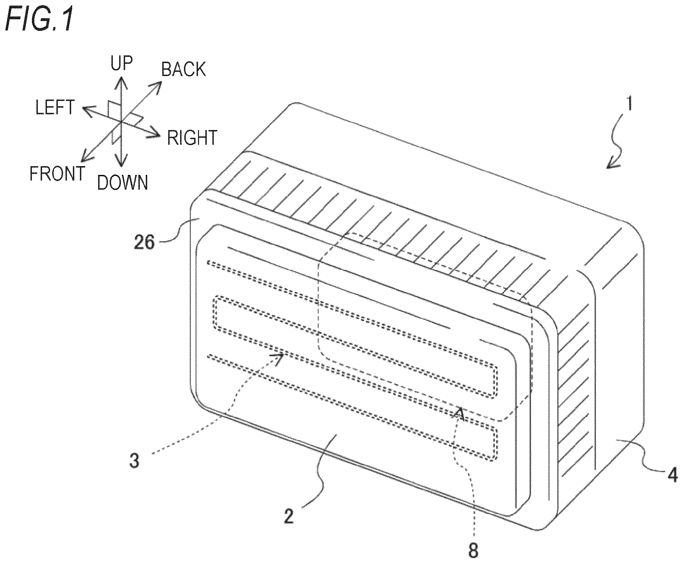

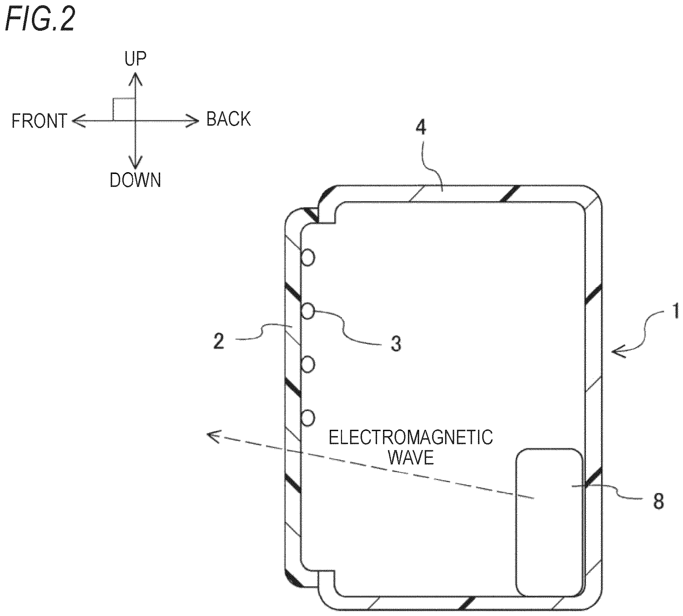

Fig. 1 is an explanatory diagram schematically illustrating the electromagnetic wave transmission cover of Example 1. Fig. 2 is an explanatory diagram schematically illustrating a state where the electromagnetic wave transmission cover of Example 1 is cut.

Hereinafter, front, back, up, down, left, and right mean the front, back, up, down, left, and right illustrated in each drawing. For reference, the front side corresponds to the front side in a vehicle traveling direction, and the back side corresponds to the rear side in the vehicle traveling direction.

As illustrated in Fig. 1, an electromagnetic wave transmission cover 1 of Example 1 includes a design portion 2, a heating element 3, a housing 4, and a vehicular electromagnetic wave device 8.

The design portion 2 is made of resin and has a substantially plate shape. The design portion 2 has a base body (not illustrated) made of PC and a hard coat layer (not illustrated) formed on the surface thereof.

As illustrated in Fig. 2, the heating element 3 is integrated with the design portion 2. The heating element 3 includes a heater wire and is disposed on the back side of the design portion 2. The heating element 3 is connected to a power source (not illustrated) and receives electric power from the power source to generate heat.

The box-shaped housing 4 is disposed on the back side of the design portion 2. The housing 4 is integrated with the design portion 2 with an opening facing the front side. The housing 4 is made of PP lower in thermal conductivity than the design portion 2. The difference in thermal conductivity between the design portion 2 and the housing 4 is approximately 0.07 W/(m·K).

LiDAR as the vehicular electromagnetic wave device 8 is accommodated in the housing 4. The vehicular electromagnetic wave device 8 emits an infrared ray as an electromagnetic wave toward the front side and receives an infrared ray incident from the front side.

The design portion 2 is disposed on the front side of the vehicular electromagnetic wave device 8. Accordingly, the design portion 2 is on the electromagnetic wave path of the vehicular electromagnetic wave device 8. In addition, the design portion 2 is capable of transmitting an infrared ray as an electromagnetic wave.

The heat generated by the heating element 3 is first conducted to the design portion 2 integrated with the heating element 3. Then, the heat is also conducted to the housing 4 integrated with the design portion 2.

Here, with the electromagnetic wave transmission cover 1 of Example 1, the thermal conductivity of the housing 4 is lower than the thermal conductivity of the design portion 2. Accordingly, for example, heat conduction from the design portion 2 to the housing 4 is slower than in a case where the thermal conductivity of the housing 4 is higher than the thermal conductivity of the design portion 2 and a case where the thermal conductivity of the housing 4 is equal to the thermal conductivity of the design portion 2. As a result, heat conduction from the design portion 2 to the housing 4 is suppressed. Accordingly, with the electromagnetic wave transmission cover 1 of Example 1, it is possible to efficiently heat the design portion 2 while suppressing heat loss.

### Example 2

The electromagnetic wave transmission cover of Example 2 is the electromagnetic wave transmission cover of the second aspect of the present invention and is substantially the same as the electromagnetic wave transmission cover of Example 1 except for an intermediate member being interposed between the design portion and the housing and the material of the housing. Accordingly, the following description of the electromagnetic wave transmission cover of Example 2 will focus on the differences from the electromagnetic wave transmission cover of Example 1.

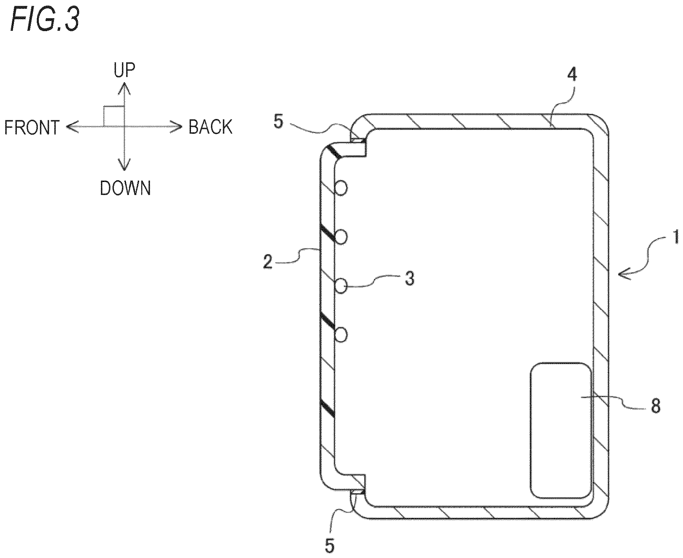

Fig. 3 is an explanatory diagram schematically illustrating a state where the electromagnetic wave transmission cover of Example 2 is cut.

As illustrated in Fig. 3, an intermediate member 5 is interposed between the design portion 2 and the housing 4 in the electromagnetic wave transmission cover of Example 2. In the electromagnetic wave transmission cover of Example 2, the intermediate member 5 is a rubber-based adhesive and is integrated with the design portion 2 and the housing 4. The thermal conductivity of the intermediate member 5 is lower than the thermal conductivity of the design portion 2.

In the electromagnetic wave transmission cover of Example 2, the thickness of the intermediate member 5, that is, the length of the intermediate member 5 between the design portion 2 and the housing 4 is approximately 5 mm.

In the electromagnetic wave transmission cover of Example 2, the housing 4 is made of aluminum higher in thermal conductivity than the design portion 2 and the intermediate member 5.

The heat generated by the heating element 3 is first conducted to the design portion 2 integrated with the heating element 3. In the electromagnetic wave transmission cover 1 of Example 2, the heat conducted to the design portion 2 is first conducted to the intermediate member 5 interposed between the design portion 2 and the housing 4. The heat conducted to the intermediate member 5 is conducted to the housing 4.

The thermal conductivity of the intermediate member 5 is lower than the thermal conductivity of the housing 4. Accordingly, heat conduction from the intermediate member 5 to the housing 4 is suppressed. In addition, in the electromagnetic wave transmission cover of Example 2, the thermal conductivity of the intermediate member 5 is lower than the thermal conductivity of the design portion 2. Accordingly, in the electromagnetic wave transmission cover of Example 2, heat conduction from the design portion 2 to the intermediate member 5 is also suppressed.

As a result, it is possible to efficiently heat the design portion 2 while suppressing heat loss with the electromagnetic wave transmission cover 1 of Example 2 as well.

### Example 3

The electromagnetic wave transmission cover of Example 3 is the electromagnetic wave transmission cover of the second aspect of the present invention and is substantially the same as the electromagnetic wave transmission cover of Example 2 except for the material of the housing. Accordingly, the following description of the electromagnetic wave transmission cover of Example 3 will focus on the difference from the electromagnetic wave transmission cover of Example 2.

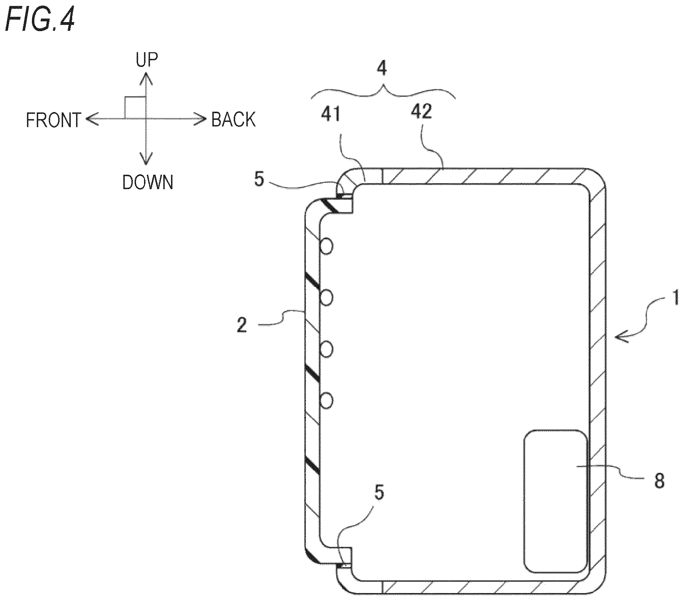

Fig. 4 is an explanatory diagram schematically illustrating a state where the electromagnetic wave transmission cover of Example 3 is cut.

As illustrated in Fig. 4, in the electromagnetic wave transmission cover 1 of Example 3, the front side of the housing 4, that is, the part of the housing 4 on the intermediate member 5 side is configured by a material different from the back side part of the housing 4. Specifically, the front side part of the housing 4 is made of the same PC as the design portion 2, and the back side part of the housing 4 is made of aluminum as in the case of the housing 4 of Example 2. The front side part of the housing 4 is referred to as a housing peripheral edge portion 41, and the back side part of the housing 4 is referred to as a housing general portion 42.

Although the thermal conductivity of the housing peripheral edge portion 41 is equal to the thermal conductivity of the design portion 2, the thermal conductivity of the entire housing 4 including the housing peripheral edge portion 41 and the housing general portion 42 is much higher than the thermal conductivity of the design portion 2.

The thermal conductivity of the intermediate member 5 is lower than the thermal conductivity of the housing peripheral edge portion 41, the thermal conductivity of the housing general portion 42, and the thermal conductivity of the entire housing 4. Further, the thermal conductivity of the intermediate member 5 is lower than the thermal conductivity of the design portion 2.

The thickness of the intermediate member 5 is approximately 5 mm in the electromagnetic wave transmission cover 1 of Example 3.

Also in the electromagnetic wave transmission cover 1 of Example 3, the thermal conductivity of the intermediate member 5 is lower than the thermal conductivity of the housing 4. Accordingly, heat conduction from the intermediate member 5 to the housing 4 is suppressed. In addition, also in the electromagnetic wave transmission cover of Example 3, the thermal conductivity of the intermediate member 5 is lower than the thermal conductivity of the design portion 2. Accordingly, heat conduction from the design portion 2 to the intermediate member 5 is suppressed in the electromagnetic wave transmission cover of Example 3 as well.

Accordingly, it is possible to efficiently heat the design portion 2 while suppressing heat loss with the electromagnetic wave transmission cover 1 of Example 3 as well.

### Example 4

The electromagnetic wave transmission cover of Example 4 is the electromagnetic wave transmission cover of the second aspect of the present invention and is substantially the same as the electromagnetic wave transmission cover of Example 2 except for the material of the housing. Accordingly, the following description of the electromagnetic wave transmission cover of Example 4 will focus on the difference from the electromagnetic wave transmission cover of Example 2.

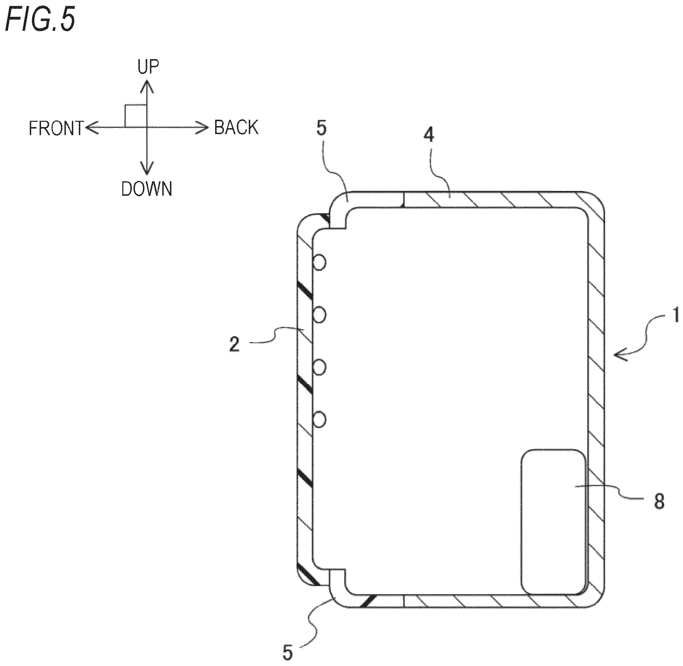

Fig. 5 is an explanatory diagram schematically illustrating a state where the electromagnetic wave transmission cover of Example 4 is cut.

As illustrated in Fig. 5, in the electromagnetic wave transmission cover 1 of Example 4, a frame-shaped or short cylindrical member is adopted as the intermediate member 5. The intermediate member 5 has an opening facing the front-back direction. The intermediate member 5 is made of PP lower in thermal conductivity than the housing 4 and the design portion 2.

In the electromagnetic wave transmission cover 1 of Example 4, the thickness of the intermediate member 5, that is, the length of the intermediate member 5 between the design portion 2 and the housing 4 is approximately 30 mm.

Also in the electromagnetic wave transmission cover 1 of Example 4, the thermal conductivity of the intermediate member 5 is lower than the thermal conductivity of the housing 4. Accordingly, heat conduction from the intermediate member 5 to the housing 4 is suppressed. In addition, also in the electromagnetic wave transmission cover of Example 4, the thermal conductivity of the intermediate member 5 is lower than the thermal conductivity of the design portion 2. Accordingly, heat conduction from the design portion 2 to the intermediate member 5 is suppressed in the electromagnetic wave transmission cover of Example 4 as well.

Accordingly, it is possible to efficiently heat the design portion 2 while suppressing heat loss with the electromagnetic wave transmission cover 1 of Example 4 as well.

The present invention is not limited to the embodiment described above and illustrated in the drawings and can be appropriately modified and implemented without departing from the gist. In addition, each component in the present specification including the embodiment can be extracted and combined in any manner.

## Claims

1. An electromagnetic wave transmission cover comprising:
a design portion disposed on a front side of a vehicular electromagnetic wave device and exposed to an outside of a passenger compartment of a vehicle;
a housing integrated with the design portion and disposed on a back side of the design portion; and
a heating element provided integrally with the design portion,
wherein the housing is lower in thermal conductivity than the design portion.

2. The electromagnetic wave transmission cover according to claim 1, wherein a difference in thermal conductivity between the housing and the design portion is 0.01 W/(m·K) or more.

3. An electromagnetic wave transmission cover comprising:
a design portion disposed on a front side of a vehicular electromagnetic wave device and exposed to an outside of a passenger compartment of a vehicle;
a housing disposed on a back side of the design portion;
an intermediate member integrated with the design portion and the housing and interposed between the design portion and the housing; and
a heating element provided integrally with the design portion,
wherein the intermediate member is lower in thermal conductivity than the housing.

4. The electromagnetic wave transmission cover according to claim 3, wherein a difference in thermal conductivity between the intermediate member and the housing is 0.01 W/(m·K) or more.

5. The electromagnetic wave transmission cover according to claim 3 or 4, wherein the intermediate member is 20 µm or more in thickness.

6. The electromagnetic wave transmission cover according to any one of claims 3 to 5, wherein the intermediate member is lower in thermal conductivity than the design portion.
